# EUROPEAN PATENT APPLICATION

(11) **EP 4 597 160 A1**
(43) Date of publication of application: **06.08.2025**
(21) Application number: 24155807.1
(22) Date of filing: 05.02.2024
(51) Int. Cl.: G01S 7/4863, G01S 17/42, G01S 17/89, G01S 7/48, G01S 7/497, G01S 17/00, G01S 17/48

(54) **EFFICIENT OPTICAL SENSING SYSTEM**

(71) Applicant: VoxelSensors SRL, 1000 Brussels (BE)
(72) Inventor: Van Der Tempel, Ward, 3140 Keerbergen (BE); Mourad, Christian, 1332 Genval (BE); Staelens, Jean-Sébastien, 1030 Schaerbeek (BE)

(57) **Abstract**

The present invention relates to a method for optical sensing. The method comprising the steps of projecting a light beam (5) onto a scene (4) by means of a projector (3), scanning said light beam (5) on said scene (4) along a trajectory, by means of a scanner, and imaging the reflected light (6) by means of optics, on sensing units (30) of a first optical sensor (2), wherein each sensing unit (30) comprises a photodetector. The method is characterized in that the method comprises the step of: where the first optical sensor (2) is dimensioned to receive the reflected light (6) from the complete scene (4), activating sensing units (30) in a first region (17) of said first optical sensor (2) where a detection of the reflected light (6) by said optical sensor (2) is expected, and deactivating sensing units (30) in at least a second region (16) where a detection of the reflected light (6) by said optical sensor (2) is not expected, wherein said activating and deactivating are based on the instantaneous projection vector direction of the light beam (5) on the scene (4).

## Description

### TECHNICAL FIELD

The present invention relates to an efficient optical sensing system.

### BACKGROUND

Image sensors are known in the art. In many cases, such sensors are made of a plurality of pixels, for example having a plurality of rows and columns. On the one hand, it is desirable to have as many pixels as possible, so as to obtain high resolution and accurately detect objects in the scene. On the other hand, such a system with many pixels would consume a lot of power. In many systems, it is often only needed to find out the detection at a point or a region of the scene, which means in such a system, only a small part of the sensor detects light at one time instance, while the pixels on the other part are stand-by to detect potential light in the upcoming time instances. However, pixels which are on stand-by also consume power, even at times in which they do not detect light.

Moreover, in such a system with many pixels, the noise becomes an issue. For example, the more pixels, the more the detected noise, and therefore the more it is needed to filter out such noise. This also consumes power and complicates the system.

There is a need therefore for an efficient optical sensing system. The present invention aims to resolve at least in part the problems mentioned above.

### SUMMARY OF THE INVENTION

It is an object of embodiments of the present invention to provide a system and method for efficient optical sensing.

In a first aspect, the present invention relates to a method for optical sensing, comprising the steps of:
- projecting a light beam onto a scene, by means of a projector;
- scanning said light beam on said scene along a trajectory, by means of a scanner;
- imaging the reflected light, by means of optics, on sensing units of a first optical sensor, wherein each sensing unit comprises a photo detector;
characterized in that the method comprises the step of:
- activating sensing units in a first region of said first optical sensor where a detection of the reflected light by said optical sensor is expected, and deactivating sensing units in at least a second region where a detection of the reflected light by said optical sensor is not expected, wherein said activating and deactivating are based on the instantaneous projection vector direction of the light beam on the scene.

It is an advantage of embodiments of the present invention that a power efficient system is obtained, since not the full optical sensor is activated, for example not all pixels or sensing units are operating all the time, but only those for which a detection is expected. It is an advantage of embodiments of the present invention that the sensing units having no chances of detecting the reflected light are deactivated. It is an advantage of embodiments of the present invention that at least 80% or at least 90% of sensing units are turned off at one time instance, preferably at least 99%, i.e. only less than 10% or less than 20% of pixels are operating at one time instance, which in turn allows at least 80% or at least 90% of power reduction for the sensing units.

It is an advantage of embodiments of the present invention that the noise is significantly reduced, since only the relevant regions of the optical sensor are operating e.g. only the relevant pixels are operating, so less pixels are operating at one time instance. Therefore, less filtering is needed, and therefore more noise immunity is obtained, as well as less power is consumed on said filtering. It is also advantageous that the latency is reduced since less processing is needed.

It is an advantage of embodiments of the present invention that the resolution of the optical sensor can be significantly increased, without causing a huge increase in the power consumption of the sensor.

Preferred embodiments of the first aspect of the invention comprise one or a suitable combination of more than one of the following features.

The method preferably comprises the step of predefining at least one component of the scanning trajectory, preferably wherein scanning said light beam starts from a predetermined region on said scene. It is an advantage of embodiments of the present invention that it is possible to estimate the expected position of the light beam at each time instance based on the instantaneous projection vector direction of the light beam. In case the scanning starts from a predetermined region, it is an advantage that the optical sensor and the projector start operating at the same corresponding point (i.e. the detection point on the sensor corresponding to a point in the predetermined region at which the light beam starts operating). It is an advantage of embodiments of the present invention that a power efficient system is obtained, while still being able to perceive the scene in full as the scene is scanned.

The method preferably comprises the step of synchronizing said projector with said optical sensor. It is an advantage of embodiments of the present invention that the instantaneous position of the light beam is known in real-time to the optical sensor, for example by a controller controlling the optical sensor, for example an external controller or a controller within the optical sensor.

The method preferably comprises the step of positioning said optical sensor and said projector on a baseline, wherein said baseline is crossing said first optical sensor and said projector, wherein the method further comprises the step of orienting the optical sensor and the projector such that the horizontal axes thereof (i.e. of both) is parallel to the baseline, and the vertical axes thereof is orthogonal to the baseline. Moreover, the plane defined by the horizontal and vertical axes of the projector and optical sensor are preferably, but not necessarily, substantially parallel to each other, and to the baseline. For example, the orientation of the optical sensor is such that there is one axis (for example along the rows of the optical sensor) of the array of pixels substantially parallel to the baseline (horizontal), and one axis (for example along the columns of the optical sensor) of the array of pixels substantially orthogonal to the baseline (vertical). In this case, the observed parallax of the scanning trajectory will be substantially expressed by a displacement along the horizontal direction, while the observed parallax will be substantially zero along the vertical direction. This allows prediction of where to find the scanning optical signal in the optical sensor along the vertical axes, which corresponds to e.g. the row it will be detected on. This is advantageous in identifying where the detection will happen on the optical sensor, and which sensing units to activate or deactivate, and therefore allows efficient operation. This is regardless of the distance of the object from the projector and/or the optical sensor.

The method would also work if the axes of the projector and optical sensor are not completely parallel to each other, but then it is needed to allow some margin on the detection side, for example to compensate for the added parallax in the vertical direction.

The method preferably comprises the step of predefining the vertical component of the scanning trajectory . It is an advantage of embodiments of the present invention that the location of detection of photons on said optical sensor is predictable, since there is no parallax along the vertical direction.

The method preferably comprises the step of configuring said optical sensor in a plurality of rows and columns of said sensing units, wherein said first region comprises at least one row and/or at least one column, preferably at least two rows and/or at least two columns, more preferably consecutive rows and/or columns. It is an advantage of embodiments of the present invention that filtering is possible based on neighborhood sensing units. It is an advantage of embodiments of the present invention that error tolerance in detection is improved.

The number of rows and/or columns in said first region is preferably variable based on at least one of: (i) said instantaneous projection vector direction of the light beam on the scene, and the relative position between the projector and the first optical sensor, and/or (ii) the rate of change of the instantaneous position of the light beam on the scene. It is an advantage of embodiments of the present invention that a power efficient system is obtained.

The variation in the first region preferably corresponds to the periodicity of the scanning trajectory over time, preferably wherein the method comprises the step of refining said variation based on measured detected signal on the optical sensor.

The method preferably comprises the step of triangulating detection points of said first optical sensor with instantaneous position of said light beam or with detection points of a second optical sensor. It is an advantage of embodiments of the present invention that the depth of objects in the scene is obtained.

The method preferably comprises the step of constructing the scene in a progressive fashion as the scene is scanned, based on 3D points obtained from said triangulation. It is an advantage of embodiments of the present invention that information about objects in the scene is obtained in low latency, or almost in real-time.

The method preferably comprises the step of filtering the detection determined by one sensing unit, based on the presence of a detection over at least one neighboring sensing unit to said one sensing unit at one time step, or based on the presence of said detection over at least two consecutive time steps. It is an advantage of embodiments of the present invention that a more reliable detection is obtained.

In a second aspect, the present invention relates to a system for optical sensing, comprising:
- at least a first optical sensor, wherein said optical sensor comprises a plurality of sensing units, and each sensing unit comprises a photo detector,
- a projector projecting a light beam on a scene,
- scanning means adapted to scan the light beam on said scene along a trajectory, and
- optics able to make an image of said scene on sensing units of said first optical sensor,
wherein the first optical sensor is adapted to activate sensing units in a first region of said first optical sensor where a detection is expected, and wherein said first optical sensor is adapted to deactivate sensing units in a second region where a detection is not expected, wherein said optical sensor is adapted to activate and deactivate the sensing units based on the instantaneous projection vector direction of the light beam on the scene.

Preferred embodiments of the second aspect of the invention comprise one or a suitable combination of more than one of the following features.

Each of said photo detectors is preferably a single photon detector, more preferably a single photon avalanche detector SPAD. It is an advantage of embodiments of the present invention that a fast detection of the position of the light beam is obtained due to the fast nature of the detectors.

The system preferably comprises at least a second optical sensor. The system is preferably adapted to triangulate detection points of said first optical sensor with projection position of said projector (in which case a second optical sensor is not needed) or with detection points of said second optical sensor. It is an advantage of embodiments of the present invention that the depth of the field of view is obtained.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 shows in (a) a side view of a system (1) for optical sensing having one optical sensor (2) and light source (3), and in (b) a front view of the optical sensor (2) and the light source (3), according to embodiments of the present invention.
Figure 2 shows the system (1) comprising a compact optical sensor (2) which is movable based on the instantaneous position of the light beam, according to embodiments of the present invention.
Figure 3 shows the light beam scanned along the y-axis on the scene (4), according to embodiments of the present invention.
Figure 4 shows a top view of the system (1) having one (2) or two (2, 21) optical sensors, according to embodiments of the present invention.
Figures 5 show the system (1), wherein the optical sensor (2) has a region where a detection is expected (17), and a region where a detection is not expected (16), according to embodiments of the present invention.
Figure 6 (a - c) shows an optical sensor (2) and a projector (3), said projector (3) emitting light at objects (9) present at different locations in the scene (4), wherein the region of expected detection (17) and region of unexpected detection (16) are based on the instantaneous position of the light beam (5), according to embodiments of the present invention.
Figure 7 illustrates different scenarios according to embodiments of the present invention.

Any reference signs in the claims shall not be construed as limiting the scope. In the different drawings, the same reference signs refer to the same or analogous elements.

### DETAILED DESCRIPTION

The present invention relates to a system and method for efficient optical sensing.

In a first aspect, the present invention relates to a method for optical sensing. The method comprises the step of projecting a light beam onto a scene, by means of a projector. The light beam creates a light spot on the scene having a predetermined spot size, said spot may for example be dot-shaped or a semi-dot or disk-shaped or a collection of dots or any other suitable shape. The method comprises the step of scanning said light beam on said scene along a trajectory, by means of a scanner. Scanning may be for example in a Lissajous pattern or a raster scan, or the like. The scanning means may for example be a MEMS scanner or a mirror, or an optical phase array, or meta surface approach beam scanning, or the like. For example, scanning between two extreme vertical lines (e.g. one on the extreme right, and one on the extreme left) defining the scene in the horizontal direction, and two extreme horizontal lines (e.g. one on the extreme top, and one on the extreme bottom) defining the scene in the vertical direction.

The light beam may be continuous or pulsed, and the present invention can work with either. It is however preferrable to use a pulsed light beam (e.g. a pulsed laser) since the power is concentrated in the pulse i.e. each pulse has a higher power while maintaining the same average power. Also, using a pulsed light beam is advantageous when using persistence or neighborhood conditions (explained below) for better filtering, as it allows to check said conditions based on the pulse length, instead of based on observation windows as in the case of a continuous pulse, which is typically longer than the pulse length.

The method comprises the step of imaging the reflected light, by means of optics, on the sensing units of a first optical sensor. Each sensing unit comprises a photo detector. For example, the scene is imaged on said first optical sensor, for example using the appropriate optics (e.g. at least one imaging optics) that are able to image said scene on said optical sensor. For example, the light is reflected, after hitting objects in the scene, imaged by said optics, and finally received by the first optical sensor e.g. by the corresponding sensing unit. In other words, such optics ensure the reflected light reaches the corresponding sensing unit.

The method comprises the step of dimensioning the first optical sensor to receive the reflected light from the complete scene, or, alternatively, to receive the reflected light from part of the scene. In the first case, the optical sensor is big enough to receive the light from the complete scene e.g. there is no need for displacing said optical sensor. However, in the second case, the optical sensor is small, in which case it is needed to properly displace the optical sensor as described below, so as to be able to perceive the full scene.

In the first case, if the first optical sensor is dimensioned to receive the reflected light from the complete scene. In this case, the method comprises the step of activating sensing units in a first region of said first optical sensor where a detection of the reflected light by said optical sensor is expected. The method comprises the step of deactivating sensing units in a second region where a detection of the reflected light by said optical sensor is not expected. For example, wherein the second region is the remaining region of said optical sensor, or for example, the sum of the first and second region is equal to the complete optical sensor. The activating and deactivating are based on the estimated or measured instantaneous projection vector direction of the light beam on the scene (e.g. on the trajectory). For example, the first and second regions are continuously updated based on the instantaneous position of the light beam on the scene. For example, some instantaneous positions of the light beam on the scene would make it expected or unexpected for certain parts of the optical sensor to receive the reflected light. It is also important to know how the movement of the light beam in the scene maps on the sensing units e.g. a certain movement of the light beam in the scene results in a certain movement of the detection on the optical sensor, therefore allowing to know which sensing units to activate and deactivate.

In other words, the light beam has a projection vector, wherein said vector has a direction at each time instance. By knowing the projection vector direction of the light beam from the scanner to the scene, it is possible to limit the operation of the sensor to the region in which a reflection is expected to be detected by the sensor.

As an example, the first region may comprise a few rows (e.g. row no. 1 to row no. 4) at a first time instance where the beam is at a first position, but at a second time instance where the beam is at a second position, the first region may comprise a few different rows (e.g. row no. 6 to row no. 9). For example, the first region (and accordingly the second region) is updated between the first and second instances, due to the change in the beam position between the first and second position. The optical sensor may be synchronized to the projector, for example information from the projector on the instantaneous position of the light beam is continuously being sent to the sensor, to be able to activate and deactivate sensing units accordingly. However, this is not always necessary, as will be explained below. For example, the optical sensor comprises a plurality of rows and columns, wherein the first region comprises a few rows and many more columns, and wherein the second region comprises the remaining region, as will be explained below and shown in the figures.

It is preferable that the first region (i.e. with expected detections) is as small as possible, and that the second region (i.e. with unexpected detections) is as big as possible. This would allow reducing the power consumption and therefore obtain a power efficient system, since only a small part of the optical sensor is activated. Deactivating the sensors with unexpected detection is desired and advantageous since they consume power by being activated and on stand-by mode i.e. even if they don't detect any photons. For example, a superior operation having power consumption of at least 80% or at least 90% can be achieved if the first region is as small as 20% or 10%of the optical sensor, and the second region is as big as 80% or 90% of the optical sensor. As a result of reducing the region of interest (i.e. the region where detection is expected), less filtering is needed (and lower power is needed for said filtering, and lower latency due to requiring less processing), therefore allowing to obtain a more noise resistant system.

The method also allows obtaining a high resolution, since this would not cause a huge increase in the power consumption of the sensor. Therefore, such an optical sensor is capable of detecting very small objects and e.g. sharp edges and complex shapes, while also having lower power consumption.

Alternatively, in the second case (i.e. in case the first optical sensor is dimensioned to receive the reflected light from part of the scene), then the method comprises the step of moving said first optical sensor based on the estimated or measured instantaneous position of the light beam on the scene (i.e. on the trajectory), such that the reflected light is received by said optical sensor. In such a case, a very compact sensor is obtained. For example, instead of activating and deactivating parts of the optical sensor, the optical sensor is made with the maximum size that allows light to be detected at one time instance, and is being moved according to the instantaneous position of the light beam to be able to receive the reflected light. For example, the optical sensor comprises at least one row, preferably a few rows, and many more columns, as will be explained throughout the document.

As mentioned above, the activating and deactivating is either based on: i) measured, or ii) estimated instantaneous projection vector direction of the light beam on the scene. In the first case, information about the light beam is known based on the measured instantaneous projection vector direction of the light beam, thereby allowing the activation and deactivation of sensing units of the optical sensor accordingly.

In the second case, information about the light beam is not known. In this case, the instantaneous projection vector direction of the light beam is estimated based on the sensing units. For example, by first activating all the sensing units in the optical sensor, and identifying which sensing units receive the reflected light, and deducing based thereon the instantaneous projection vector direction. Based thereon, the region of interest is reduced i.e. many sensing units are deactivated (i.e. since it is not expected or in many cases not possible for them to detect the reflected light beam), and some sensing units are kept activated. Thereafter, the status of the sensing units (being activated or deactivated) must be updated, by following the trajectory of the light beam on the scene. This is assuming the trajectory of the light beam is continuous. Finally, if the detection is lost at any moment, then the region of interest may be increased i.e. all or most of the sensing units of the optical sensor may be activated again, in order to find out the sensing units at which the detection happens, after which the process is repeated.

Preferably, the method comprises the step of predefining at least one component of the scanning trajectory. For example, predefining the instantaneous position of the light beam on the scene at each time step along the trajectory. For example, knowing in advance where the light beam will be at each time step, by estimating the expected position of the light beam. This allows to predict in advance which sensing units needs to be activated and deactivated at each time step, since the behavior of the projector is known i.e. since the scanning trajectory is known. Alternatively or additionally to knowing the instantaneous position of the light beam at each time step, a preferred embodiment is configuring the scanning of said light beam to start from a predetermined region on said scene, which provides a possible starting point of operation for the optical sensor and the projector i.e. allows indirect synchronization between the optical sensor and the projector i.e. synchronization without having a link between the optical sensor and the projector. For example, the projector starts operating at a point in the predetermined region on which the projector starts scanning, while the optical sensor starts operating at the corresponding pixel or pixels. For example, the projector starts operating at the zero-crossing of the vertical axis of the projector, and the optical sensor starts operating at the corresponding zero-crossing of the vertical axis of the optical sensor. The zero-crossing of the vertical axis is defined as the point on the axis at which the value is zero. In this case, the vertical zero-crossing is relevant because there no parallax in that direction, therefore it is possible to correspond the zero-crossing of the projector to the optical sensor, and vice versa, and therefore allow the projector and optical sensor to start operating at the predetermined region.

In other words, by knowing the time step at which the scanning starts, and its instantaneous position, and the overall trajectory, it is possible to indirectly synchronize the projector to the optical sensor, without having a direct synchronization link between the optical sensor and projector.

However, in some cases, a direct synchronization link may still be preferred, for example to compensate for frequency mismatch. As a result, it is possible to know which sensing units to activate or deactivate at each time step. Alternatively, the projector provides a signal which is fed to a controller controlling the optical sensor, which signal allows the optical sensor to know when the operation will start, after which the predefined trajectory is known to the optical sensor. The controller may be an external controller or a controller within the optical sensor (e.g. logic).

Alternatively or additionally to predefining the trajectory, the method preferably comprises the step of predicting the first and the second regions at each time step based on the trajectory. For example, the method comprises the step of analyzing the trajectory and predicting based thereon the instantaneous position at each time step, and based thereon predict the first and second regions at each time steps without predefining the trajectory, for example in case the trajectory repeats itself after a certain time span or in case the trajectory is predictable. The advantage is that synchronization between the optical sensor and the projector is no longer needed. For example, the zero-crossing may provide information on the frequency and phase of the light beam.

Preferably, the method comprises the step of synchronizing said projector with said optical sensor. This allows the controller of the optical sensor to know easily and in real-time the instantaneous position of the light beam on the scene and therefore to know which sensing units to activate, and which sensing units to deactivate. For example, a feedback loop is provided from said projector to said optical sensor.

Preferably, the method comprises the step of positioning said optical sensor and said projector on a baseline. The baseline crosses said first optical sensor and said projector. In the case of a second optical sensor (as discussed at different parts of the description), the baseline is also crossing said second optical sensor. The method further comprises the step of orienting the optical sensor and the projector such that the horizontal axis thereof is parallel to the baseline, and the vertical axis thereof is orthogonal to the baseline. The baseline is normally defined between two cameras, however in this case, it is between a projector and a camera i.e. the first optical sensor, and/or a second optical sensor. As explained in the summary section, this is advantageous in identifying where the detection will happen on the optical sensor, and which sensing units to activate or deactivate, and therefore allows efficient operation. This surprising effect happens as a result of having the optical sensor and the projector on said baseline and the geometry of this arrangement.

For example, the light beam has both vertical and horizontal components.. In this case however, only the vertical component is relevant, since there is no parallax along the vertical direction. This allows the location of detection of photons on the optical sensor to predictable.

In other words, the baseline and the projection vector of the beam define a plane in which the spot is located. Said plane corresponds to a line on the optical sensor, which is parallel to the baseline
Preferably, the method comprises the step of configuring said optical sensor in a plurality of rows and columns of said sensing units. For example, said first region comprises at least one row and/or at least one column. However, to allow better filtering, it is preferred that said first region comprises at least two (or three of four or as suitable) rows and/or at least two (or three or four or as suitable) columns, more preferably wherein said rows and/or columns are consecutive.

For example, this allows filtering based on neighborhood detections e.g. to exclude single isolated detections caused by noise. This also provides some error tolerance in case the photons were not detected by the predicted sensing units, but by sensing units which are neighboring thereto. For example, the number of rows and columns may be chosen as suitable to compensate for errors and to make sure of receiving the light by the optical sensor. For example, the light spot (generated by the light beam) has a spot size, wherein the number of rows is chosen such that the spot size is completely detected by said optical sensor. For example, the first region comprises certain rows based on the vertical angle of emission as described above, and/or the first region comprises certain columns as explained below.

It is preferred that the sensor is oriented such that said rows are parallel to the baseline, and said columns are perpendicular on the baseline.

Preferably, the number of rows and/or columns in said first region is variable based on at least one of: (i) said expected instantaneous position of the light beam on the scene (or, in other words, the instantaneous projection vector direction of the light beam on the scene), and the relative position between the projector and the first optical sensor, and/or (ii) the rate of change of the instantaneous position of the light beam on the scene.

Regarding case (i), the instantaneous position of the light beam on the scene may require more or less rows and/or columns at different time steps. For example, if the instantaneous position of the light beam is to the extreme right, and the optical sensor is located at the left side of said projector, then the region of expected detection is smaller than in the case the instantaneous position is to the extreme left. This is further illustrated in the figures below. For example, the variation may be periodic, corresponding to a periodic trajectory.

For example, the method comprises the step of deactivating a third region of said optical sensor, wherein said third region is the furthest from said projector, such that a detection of the reflected light by said third region is unexpected. Said third region comprises at least one column, preferably a plurality of columns. For example, if the optical sensor was at the right side of the projector, then the furthest columns from said projector are those located at the right side of the optical sensor. In this case, a number of columns at the right side of the optical sensor do not have a chance to detect photons, because the reflected light from the projector, being on the left side of the optical sensor, could not be detected by said optical sensor. For example, the number of columns in said third region is variable based on said instantaneous position of the light beam on the scene. This helps to further reduce power consumption. Based on the design and the size of the optical sensor and projector, at least one column can be deactivated, preferably a plurality of columns, therefore further reducing the power consumption by the optical sensor. Preferably, said furthest region is at least 5% of said optical sensor, preferably at least 10%, more preferably at least 15%, or in some cases, for example, up to 50%.

Regarding case (ii), the number of rows and columns that are activated at one time instance depends on the rate of change of the position of the light beam on the scene, for example depending on the trajectory. For example, the position of the light beam may change faster or slower at different parts of the scene depending on the slope of the trajectory. For example, it may be needed to activate more rows and columns in case the position of the light beam changes faster at one part of the scene, while it may be needed to activate less rows and columns in case the position of the light beam changes slower at another part of the scene.

Preferably, the variation in the first region corresponds to the periodicity of the scanning trajectory over time. Said periodicity may be already known (predefined, by knowing the projection vector of the projector at each time step), or alternatively may be extracted. In both cases, the first region is varied accordingly. For example, the periodicity can be extracted by observing the scene, at different time steps, for a time that is sufficiently long. For example, the vertical component of the projection vector and periodicity thereof can be obtained by observing the scene for a sufficiently long period. Additionally or alternatively, for example, the periodicity can be extracted from the zero-crossings of the projector. This is advantageous in improving power efficiency. Furthermore, the method preferably comprises the step of refining said variation based on the measured detected signal on the optical sensor. This provides a feedback mechanism to correct the variation of the first region based on the detected signal. Generally, other parameters may also be extracted (instead of being pre-defined), for example, the projection field of view and sensor field of view with respect to each other, the calibration parameters of the optical sensor.

Preferably, the method comprises the step of triangulating detection points of said first optical sensor with instantaneous position of said light beam or with detection points of a second optical sensor. This allows obtaining the depth of objects in the scene. Since the detection relies on the instantaneous position of the light beam, the need for stereo-matching is eliminated, for example between the light source and the first optical sensor, or between the first optical sensor and a second optical sensor. For example, the image in the first optical sensor can be matched to the image in the second optical sensor, for example using said light spot as a reference, without need for stereo-matching.

Preferably, the method comprises the step of constructing the scene in a progressive fashion i.e. as the scene is scanned, based on 3D points obtained from said triangulation. In other words, one 3D point is obtained at each time step, such that the scene and information thereof is progressively obtained. This allows low latency operation and real-time knowledge of objects in the scene.

Preferably, the method comprises the step of filtering the detection determined by one sensing unit, based on the presence of a detection over at least one neighboring sensing unit to said one sensing unit at one time step, or based on the presence of said detection over at least two consecutive time steps. This allows reliable detection. For example, a noise signal would neither, in most cases, appear over many neighboring pixels, nor appear on the same pixel over multiple consecutive time steps.

In a second aspect, the present invention relates to a system for optical sensing. The system comprises at least a first optical sensor, wherein said optical sensor comprises a plurality of sensing units, and each sensing unit comprises a photo detector.

The system comprises a projector projecting a light beam on a scene. The projector is, for example, a light source. The light source is adapted to generate a light beam which generates a light spot on said scene (i.e. the field of view of the optical sensor).

The system comprises scanning means adapted to scan the light beam on said scene along a trajectory. Said trajectory comprises a plurality of points on said scene, wherein at each time step, one point is scanned. It is preferable to scan as many points as possible, since this implies more information is obtained in relation to the scene and the depth of each point. However, the skilled person understands the time-speed tradeoff, for example having more points would result in slower scanning. Scanning is preferably continuous, such that objects in the first field of view are continuously scanned and identified. For example, a light source generates a light beam, which produces a light spot on an object, wherein said beam is continuously scanned on said scene along said trajectory.

The system comprises optics able to make an image of said scene on sensing units of said first optical sensor. Based on the location of the light beam imaged on said first optical sensor, the depth information of the scene can be calculated.

Scanning the scene allows calculating the depth of each point along the trajectory. However, this invention is not limited to obtaining the depth information of objects in the scene, but is generalized to any system performing optical sensing for different purposes, in which information is obtained on the instantaneous position of the light beam, after which certain sensing units are deactivated, such that a power efficient system is obtained. For example, the instantaneous position of the light beam is known (or found) for each time step.

Where the first optical sensor is dimensioned to receive the reflected light from the complete scene, the first optical sensor is adapted to activate sensing units in a first region of said first optical sensor where a detection is expected, and wherein said first optical sensor is adapted to deactivate sensing units in a second region where a detection is unexpected, wherein said optical sensor is adapted to activate and deactivate the sensing units based on the estimated or measured instantaneous projection vector direction of the light beam on the scene.

Alternatively, where the first optical sensor is dimensioned to receive the reflected light from part of the scene, the first optical sensor is adapted to be displaced based on the estimated or measured instantaneous position of the light beam on the scene, such that the reflected light is received by said optical sensor.

For example, the reflected light from the scene (e.g. from an object in the scene) is received by at least one sensing unit, after which the optical pulse is translated into an electrical signal or logic pulse. Each pulse is timestamped with respect to a reference clock. The detected signal is subsequently filtered, for example using temporal and neighborhood information, for example as described in PCT IB2021 054688, PCT EP2021 087594, PCT IB 2022 000323, and PCT IB2022 058609. For example, checking the detection of the neighboring sensing units, since the detections are likely to be detected over more than one pixel, as described in PCT EP2021 087594. Alternatively or additionally, checking the persistence of the detections over time as described in PCT IB2022 058609. Therefore, the detections which are persistent over a long period of time are likely true detections, and the detections otherwise are likely false detections. Other filtering mechanisms may be envisaged, as described in PCT IB2021 054688, PCT EP2021 087594, PCT IB2022 000323, and PCT IB2022 058609.

Since the detection is based on the light beam, and since there is a significant difference between an illuminated point and a non-illuminated point due to the concentration of the illumination in a small area (e.g. the beam is a dot-like pattern), the system is immune to ambient light. At the same time, it is known where the beam is shining at each moment, therefore a detection in a spot or area in which the beam is not shining at that moment, is likely a false detection. Similarly, since the detection is based on said beam being dot-like, the power consumption is minimal.

Preferably, the projector is synchronized to the optical sensor, as described in the method of the first aspect. Alternatively, the components (i.e. vertical and horizontal components) of the scanning trajectory are pre-defined, preferably wherein the projector starts scanning the light beam from a predetermined region on the scene, as explained in the method of the first aspect. Preferably, predefining at least the vertical component of the scanning trajectory.

Preferably, the system is arranged such that the optical sensor and projector are on a baseline. Furthermore, the optical sensor and projector are arranged such that the horizontal axes thereof are parallel to the baseline, and the vertical axes thereof are orthogonal to the baseline. As explained in the method of the first aspect, this arrangement is beneficial as the parallax is substantially zero along the vertical direction.

Preferably, each of said photodetectors is a single photon detector, preferably a single photon avalanche detector SPADs. Alternatively, said photo detector is an avalanche photo detector. Single photon detectors are advantageous since they are fast by nature, such that the position of the light beam (and the spot it leaves on the scene) is detected in a fast manner and accurate manner. Single photon detectors also minimize the energy needed to be able to detect said beam. In other prior art systems where single photon detectors are not used, the detection is slow such that for example the beam on the field of view appears as a line instead of individual light spots, in which case stereo matching would be needed. However, using single photon detectors to detect a light spot (e.g. a dot) that is being scanned, eliminates the need for stereo-matching.

Furthermore, using a single photon detector such as SPAD in the pixels (i.e. sensing units) is advantageous because it is sensitive to a single photon, which means that the active projected structure will need a minimum amount of energy since the detector is single photon sensitive. Another advantage is sub-nanosecond response time of detectors such as SPADs, meaning the photon is detected and encoded into a digital signal in nanoseconds.

For example, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

Preferably, the system comprises at least a second optical sensor, for example constructed similarly to the first optical sensor. Preferably, the system is adapted to triangulate detection points of said first optical sensor with, in a first case, projection position of said projector (in which case a second optical sensor is not needed), or, in a second case, with detection points of said second optical sensor. This allows to obtain the depth information at each point in the scene. In the first case, it is known where the light source is shining at each moment. Therefore, triangulation may be based on the detection points of said first optical sensor, and the location from where the light source is originating, similarly to the case in which a second optical sensor is used to achieve said triangulation. For example, considering the light source as a camera or an optical sensor, for which the image plane would then contain the dots forming the scanning pattern, instead of seeing or detecting the light spot with the sensing units. For example, the instantaneous position and orientation of the light beam projected by said projector is triangulated with the detection of one optical sensor. In the second case, the detection points of the first and the second optical sensors are triangulated.

Scanning a light beam from said projector or light source is advantageous in allowing triangulation. For example, using a system comprising a light source emitting a light beam on a scene (e.g. an environment) and two of said optical sensors, wherein said two sensors have a shared field of view of the scene, it is possible to convert x-y-time data of the two sensors to x-y-z-time data by triangulation, for each time stamp. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the first optical sensor can be triangulated with those of the second optical sensor, to create the depth or z-dimension. For example, the system is adapted to construct the scene in a progressive fashion as the scene is scanned, based on 3D points obtained from the triangulation.

Preferably, finding depth information may be preceded by a filtering step, for example to reduce the number of sensing units with false detections or to smoothen the quantization introduced by the discretization of position by the pixel resolution. Filtering may be based on expected pulse width, expected dot projection size, past detection(s) and current detection(s) of the pixel and its neighboring pixel(s). For example, checking the detection of the neighboring sensing units (e.g. pixels), or checking the persistence of the detections over time. This is an in-pixel filtering mechanism. Another filtering mechanisms may be also available, for example after projecting the detections on a periphery of the optical sensor, it is possible to remove some noisy detections, since the projection pattern is known.

Preferably, the detected signal is thereafter outputted on row and column signal busses, allowing to know the locations (i.e. the x, y coordinates) of the light beam on the scene at each time stamp. For example, filtering is done based on past bus information to identify detection locations with highest likelihood of having detected photons originating from active illumination. For example, the optical sensor is configured in a plurality of or rows and bus columns, wherein said first region comprises at least one row and/or at least one column, preferably at least two rows and/or at least two columns, more preferably consecutive rows and/or columns.

Preferably, the system is adapted such that the number of rows and/or columns in said first region is variable based on at least one of: i) said instantaneous projection vector direction of the light beam on the scene, and the relative position between the projector and the first optical sensor, and/or ii) the rate of change of the instantaneous position of the light beam on the scene, as explained in the method of the first aspect.

Preferably, the system is adapted such that the variation in the first region corresponds to the periodicity of the scanning trajectory over time. Preferably, the system is adapted to measure the detected signal on the optical sensor, and refine said variation based on said measured detected signal. For example, the system comprises a memory element, wherein information on the projection vectors at each time step, scanning trajectory and periodicity thereof, and fields of view, are predefined on said memory element.

Alternatively or additionally to predefining said information (projection vectors ...etc), the system comprises a processing unit which is able to calculate the vertical component of the projection vectors and periodicity thereof, based on observing the scene and the detected light on the optical sensor for a period of time that is sufficiently long to calculate said information. The processing unit may store such information on a memory element. Based on such observation, the periodicity or the scanning trajectory may be refined.

The system preferably also comprises a calibration unit, able to calibrate the system and its components, and extract calibration parameters (e.g. distortion, rotation...etc.).

Preferably, the light source is adapted to be in a wavelength detectable by the sensing units of the optical sensor. For example, between 100 nanometer and 10 micrometer, preferably between 100 nanometer and 1 micrometer. For example, each optical sensor comprises photo detectors able to detect photons impinging on each detector within a wavelength detection window falling within the range of 100 nanometer and 10 micrometer, preferably between 100 nanometer and 1 micrometer. It is also possible to use multiple wavelengths to reduce sensitivity to surface and color, and then have a filter on chip.

Preferably, the system comprises image representation means, for example a screen-like or other image representation devices, so as to reproduce locations of points of said objects in said scene.

Preferably, the optical system is used for 3D vision applications. For example, the system may be used to visualize objects in three dimensions. Alternatively, said sensor may allow analyzing the scene, for example by extracting features of objects in the scene, without necessarily producing an image of said scene. Preferably, the system comprises a plurality of optical sensors and/or a plurality of light sources. This is advantageous in creating 3D vision. For example by triangulating the outputs (i.e. the x-y data) of two such optical sensors to obtain 3D information (x-y-z data).

Any feature of the second aspect (system) may be as correspondingly described in the first aspect (method). For example, the system of the second aspect is operating based on the method of the first aspect.

Further characteristics and advantages of embodiments of the present invention will be described with reference to the figures. It should be noted that the invention is not restricted to the specific embodiments shown in these figures or described in the examples, but is only limited by the claims.

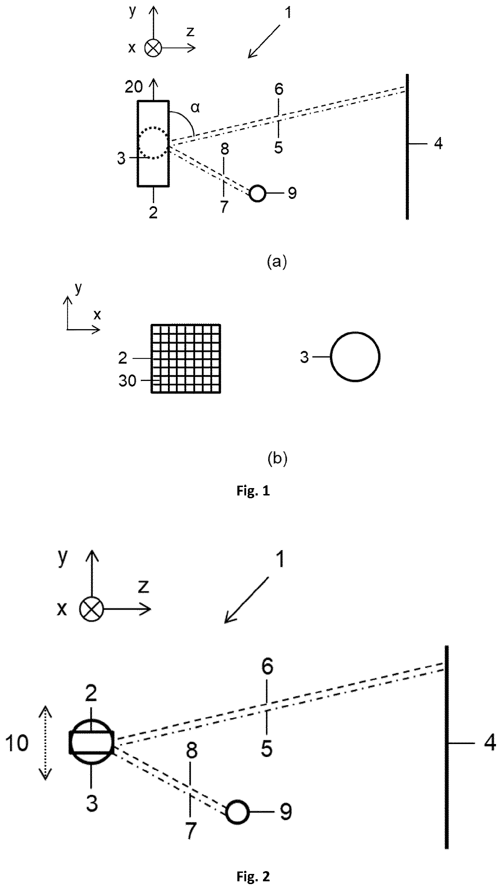

Fig. 1 (a) shows a side view of an optical sensing system (1), comprising a first optical sensor (2). The first optical sensor (2) comprises a plurality of sensing units (30) as shown in Fig. 1 (b). Each sensing unit (30) comprises a single photon detector, preferably a SPAD. The SPADs output a binary value, for example corresponding to whether a SPAD detects a photon. The system (1) comprises a projector (3) e.g. a light source. In Fig. 1 (a), the optical sensor (2) is shown, while the projector (3) is hidden behind said sensor (2). Fig. 1 (b) shows a front view of the optical sensor (2) and the projector or light source (3).

The projector (3) is adapted to project a light beam (5, 7) on the scene (4). The system (1) comprises optics (not shown) able to produce an image of the scene (4) on said optical sensor (2). For example, the reflected light (6, 8) is reflected from the scene (4) or from objects (9) in the scene (4). The reflected light (6, 8) is imaged on the first optical sensor (2) by means of said optics. For example, an image is produced on sensing units (30) of said first optical sensor (2). The system (1) also comprises a scanner (not shown), which scans the light beam (5) along a trajectory on the scene (4).

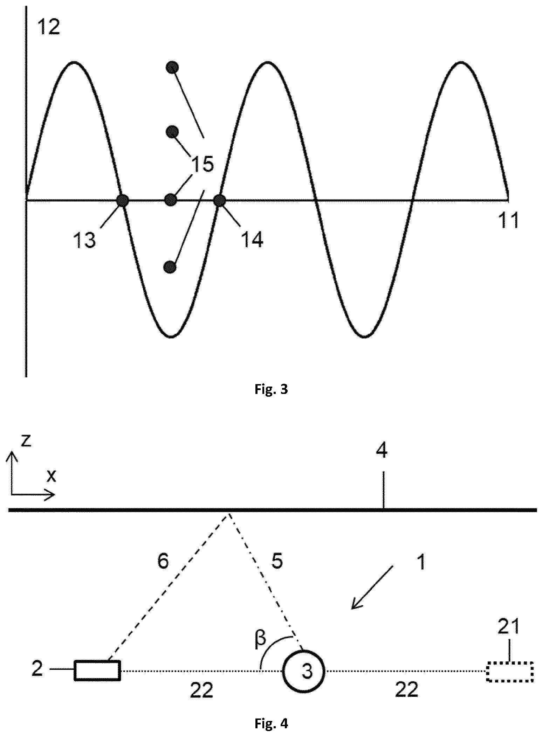

The optical sensor (2) and projector (3) are placed on a horizontal line (22) i.e. the baseline, parallel to the scene (4), as is shown later in Fig. 4. The scene is illustrated here as flat surface for simplicity, however the scene in real life is a 3D scene, therefore the wording parallel to the scene is not to be understood in a literal way. We also define a first angle (α) and a second angle (β) for simplicity, but the accurate way to explain the invention is as described above i.e. that the sensor and projector are oriented such that the horizontal axis thereof is parallel to the baseline, and the vertical axis thereof is orthogonal to the baseline, such that there is no parallax along the vertical direction. The light beam (5) incident on said scene (4) creates a first angle (α) with a line (20) perpendicular to the baseline (22) and parallel to said scene (4). The first angle (α) is referred to as the vertical angle i.e. the angle of emission of said light beam by said projector with respect to the vertical. Such an angle (α) is substantially the same or very similar to the angle in which the reflected light (6) is reflected on said optical sensor (2) with respect to the vertical, regardless of whether an object is present close to or further away from the projector (3) and the optical sensor (2). In other words, based on the first angle (α), it is possible to predict to a great extent which region of the optical sensor (2), or which sensing units (30) thereof, would detect the reflected light (6). In other words, based on the instantaneous position of the light source (3), it is possible to predict in which region it is expected to detect the reflected light (6), and in which regions it is not expected to detect the reflected light (6). Therefore, based on said prediction, it is possible to activate parts of the optical sensor (2) by which a detection is expected, and deactivate other parts of the optical sensor (2) by which a detection is not expected. More specifically, it is possible to activate rows of sensing units (30) by which detection is expected, and deactivate rows of sensing units (30) by which detection is unexpected. In other words, the first angle (α) allows to predict which rows will have a detection, and which not. This has the advantage of significantly reducing the power consumption of the optical sensor (2), since a significant percentage of the optical sensor (2) is disabled, since there is no chance of detecting a photon thereby. To minimize errors, it is preferable to activate at least a few or several rows of sensing units (30).

In other words, regardless of the distance of the object (9) from the optical sensor (2) and the projector (3), the angle with respect to the vertical line (i.e. the line vertical on the baseline and parallel to the scene) for both emitted and received light (5, 6) is the same or substantially the same, and therefore the region in which the light will be received on the optical sensor (2) can be predicted. More specifically, the rows of sensing units (30) detecting the reflected light beam (6) can be predicted. This is unlike the horizontal angle with respect to the baseline (shown in Fig. 4), where the distance of the object determines where the reflected light beam will be received on the optical sensor (2), as shown in Fig. 4.

Fig. 2 shows a similar system to the one in Fig. 1. However, in Fig. 1, the optical sensor (2) is dimensioned to receive the reflected light from the complete scene (4), while in Fig. 2, the optical sensor (2) is compact and substantially one-dimensional, such that it is dimensioned to receive the reflected light (6) from part of the scene (4). In this case, to be able to perceive the full scene (4), the optical sensor (2) is displaced (10) based on the instantaneous position of the light beam on the scene (4), so as to receive the reflected light (6) from all the scene (4). Similarly to Fig. 1, the first angle (α) allows to predict the needed displacement of said optical sensor (2).

Fig. 3 shows a trajectory being a sine wave, along which the light beam (5) is scanned on the scene (4) in the y-direction. The light beam (5) is also scanned along a similar trajectory in the x-direction. In case the optical sensor (2) is not synchronized with the projector (3), it would not be possible for the optical sensor (2) to know where the light beam is being scanned on the scene (4) in the beginning of the operation, especially in the presence of noise. For example, there may be multiple potential positions (15) of the light beam on the scene (4). The solution is to choose a point in which the operation starts, for example, a predetermined region of the scene (4). For example, points in the middle of the scene (4), for example the zero crossings (13, 14) of the sine wave on said scene (4).

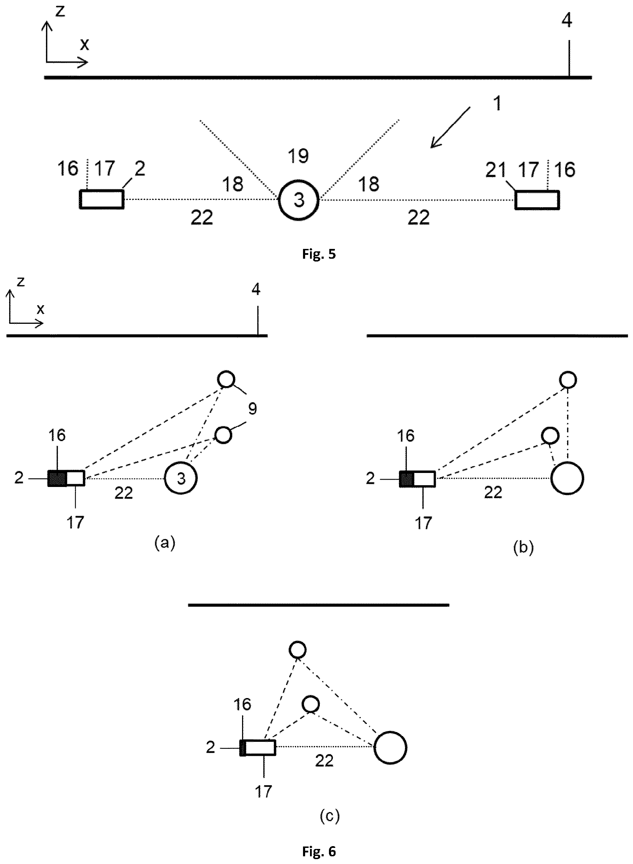

Fig. 4 shows a top view of the optical system (1), similarly to Fig. 1, comprising one (2) or two (2, 21) optical sensors. The optical sensor (2) is separated from the projector (3) by the baseline (22). The light beam (5) creates a second angle (β) with the baseline (22), referred to as the horizontal angle. However, knowing the second angle is not as helpful as it is in case of knowing the first angle, since the region in which the light is received on the optical sensor (2) depends on the distance of the object in the scene. In other words, it is possible to predict with high accuracy at which row (or group of rows) the detection would be received (i.e. using the first angle). However, it may be less straightforward to predict with accuracy on which column (or group of columns) the detection would be received, as shown in Fig. 6 and the description thereof below. Therefore, it is preferred that one whole row or a few whole rows are activated where a detection is expected, while deactivating the other rows.

Fig. 5 shows the system (1) with two optical sensors (2, 21) having a region of expected detection (17), and a region of unexpected detection (16), depending on the instantaneous position of the light beam on the scene (4). For example, in Fig. 5, the most left part of the first optical sensor (2) has no expectancy of detecting a photon. Similarly, the most right part of the second optical sensor (21) has no expectancy of detection. At the same time, there is a range out of which the projector (3) cannot emit light, for example the region (19) is the one in which the projector (3) can operate, and the regions (18) are the ones in which the projector (3) cannot operate. The depth of objects in the scene (4) may be obtained by triangulation of the location of the detected light on the two optical sensors (2, 21), or alternatively, by triangulating the location of the detected light on the first optical sensor (2) and instantaneous position of the emitted light of the projector (3).

Fig. 6 shows an optical sensor (2) and a projector (3), said projector (3) emitting light at objects (9) present in different locations in the scene (4) with respect to the optical sensor (2) and projector (3). In (a), the object (9) is on the right side of the projector (3). Assuming the scanner is scanning said object (9), the expected region of detection on the optical sensor (2) is the first region (17), while the second region (16) has no chances of detecting a photon. In (b), the object (9) is in front of the projector (3), which slightly shrinks the second region (16) of expected detections in comparison to (a), since the instantaneous position of the scanned light beam has moved, and therefore the first region (17) is wider. In (c), the object (9) is at the left side of the projector (3), which makes the first region (17) even wider than in (a) and (b). Using this information, it may be possible to avoid activating complete rows of sensing units (30), and instead only partially activating rows of sensing units (30), depending on the instantaneous position of the light beam on the scene (4). In other words, the second region (16) is a blind spot which widens or diminishes depending on the instantaneous position of the light beam in the scene (i.e. the direction of the laser emission). For example, the wide black box (16) in (a) shows that the blind spot is wide in comparison to the narrower black box (16) in (c).

The skilled person understands that the optical sensor (2) cannot detect objects located at infinite distance therefrom, and therefore the scene (4) in the figures is located at the furthest possible detectable point.

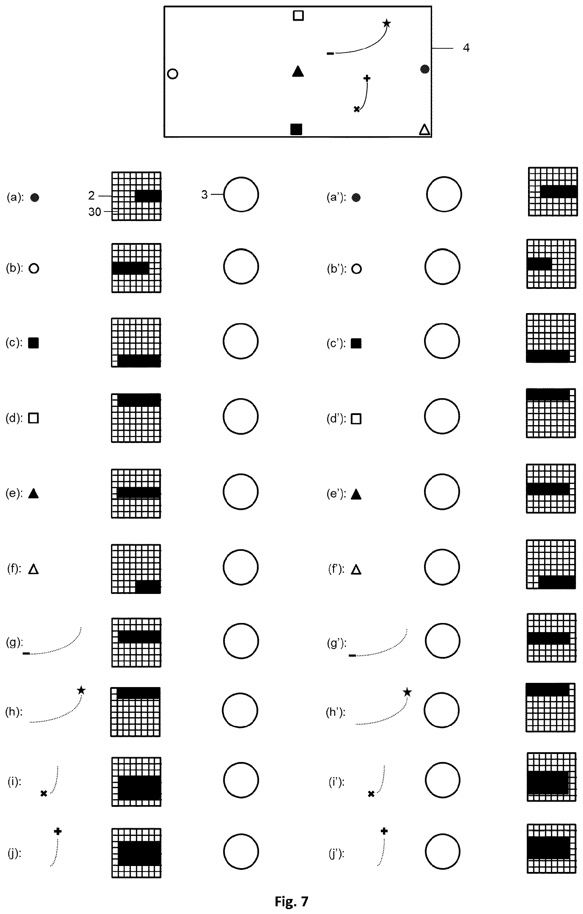

Fig. 7 shows a summary of different scenarios according to embodiments of the present invention. In (a), the region of expected detections (marked in black) in the optical sensor (2) of the solid circle is smaller than in (a'), since the illumination is at the extreme right side of the scene, and the projector (3) is at the right side of the optical sensor (2) in (a). For example, first it is decided which rows are relevant, and thereafter it is decided which columns in these rows can be discarded. This is similarly shown in (b, b') and (f, f') for a different instantaneous position of the light beam.

In (c) and (c'), the illumination at the scene is at the lower central location, therefore the region of expected detections of the solid square is mostly at the lower part of the optical sensor. However, unlike in (a, a', b, b'), less sensors at the sides can be deactivated, since the instantaneous position of the light beam is not as extreme to the optical sensor (2) and the projector (3). This is similarly shown in (d, d') and (f, f) for a different instantaneous position of the light beam.

In (g, g') and (h, h'), the trajectory is shown to have a slower rate of change of the instantaneous position of the light beam, in comparison to (i, i') and (j, j'). Therefore, in (i, i') and (j, j'), the region of expected detection is more than it is in the previous scenarios, to accommodate the expectancy of detection over a bigger range in the optical sensor, due to the fast rate of change of the instantaneous position of the light beam.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Optical sensing system
- **2**: First optical sensor
- **3**: Projector
- **4**: Scene
- **5**: First emitted light beam
- **6**: First reflected light beam
- **7**: Second emitted light beam
- **8**: Second reflected light beam
- **9**: Object
- **10**: Displacement the optical sensor
- **11**: Time axis
- **12**: Y axis
- **13**: First zero crossing
- **14**: Second zero crossing
- **15**: Expected positions of the beam
- **16**: Region of no expected detections / Second region
- **17**: Region of expected detection / First region
- **18**: Region of no illumination
- **19**: Region of illumination
- **20**: Perpendicular line
- **21**: Second optical sensor
- **22**: Straight line crossing the optical sensor and the projector / baseline
- **30**: Sensing unit

## Claims

1. A method for optical sensing, the method comprising the steps of:
- projecting a light beam (5) onto a scene (4), by means of a projector (3);
- scanning said light beam (5) on said scene (4) along a trajectory, by means of a scanner;
- imaging the reflected light (6), by means of optics, on sensing units (30) of a first optical sensor (2), wherein each sensing unit (30) comprises a photo detector;
**characterized in that** the method comprising the step of:
- activating sensing units (30) in a first region (17) of said first optical sensor (2) where a detection of the reflected light (6) by said optical sensor (2) is expected, and deactivating sensing units (30) in at least a second region (16) where a detection of the reflected light (6) by said optical sensor (2) is not expected, wherein said activating and deactivating are based on the instantaneous projection vector direction of the light beam (5) on the scene (4).

2. A method according to claim 1, wherein the method comprises the step of synchronizing said projector (3) with said optical sensor (2).

3. A method according to any of the previous claims, wherein the method comprises the step of predefining at least one component of the scanning trajectory, preferably wherein scanning said light beam (5) starts from a predetermined region (13, 14) on said scene (4).

4. A method according to any of the previous claims, wherein the method comprises the step of positioning said optical sensor (2) and said projector (3) on a baseline (22), wherein the method further comprises the step of orienting the optical sensor and the projector such that the horizontal axes thereof are parallel to the baseline, and the vertical axes thereof are orthogonal to the baseline.

5. A method according to claim 4, wherein the method comprises the step of predefining the vertical component of the scanning trajectory.

6. A method according to any of the previous claims, wherein the method comprises the step of configuring said optical sensor (2) in a plurality of rows and columns of said sensing units (30), wherein said first region (17) comprises at least one row and/or at least one column, preferably at least two rows and/or at least two columns, more preferably consecutive rows and/or columns.

7. A method according to claim 6, wherein the number of rows and/or columns in said first region (17) is variable based on at least one of: i) said instantaneous projection vector direction of the light beam (5) on the scene (4), and the relative position between the projector (3) and the first optical sensor (2), and/or ii) the rate of change of the instantaneous position of the light beam (5) on the scene (4).

8. A method according to any of the previous claims, wherein the variation in the first region (17) corresponds to the periodicity of the scanning trajectory over time, preferably wherein the method comprises the step of refining said variation based on measured detected signal on the optical sensor.

9. A method according to any of the previous claims, wherein the method comprises the step of triangulating detection points of said first optical sensor (2) with instantaneous position of said light beam (5) or with detection points of a second optical sensor (21).

10. A method according to claim 9, wherein the method comprises the step of constructing the scene (4) in a progressive fashion as the scene is scanned, based on 3D points obtained from said triangulation.

11. A method according to any of previous claims, wherein the method comprises the step of filtering the detection determined by one sensing unit (30), based on the presence of a detection over at least one neighboring sensing unit to said one sensing unit at one time step, or based on the presence of said detection over at least two consecutive time steps.

12. An optical sensing system (1) for optical sensing, comprising:
- at least a first optical sensor (2), wherein said optical sensor (2) comprises a plurality of sensing units (30), and each sensing unit (30) comprises a photo detector,
- a projector (3) adapted to project a light beam (5) on a scene (4),
- scanning means adapted to scan the light beam (5) on said scene (4) along a trajectory, and
- optics able to make an image of said scene (4) on sensing units of said first optical sensor (2),
wherein the first optical sensor (2) is adapted to activate sensing units in a first region (17) of said first optical sensor (2) where a detection is expected, and wherein said first optical sensor (2) is adapted to deactivate sensing units in a second region (16) where a detection is unexpected, wherein said optical sensor (2) is adapted to activate and deactivate the sensing units based on the instantaneous projection vector direction of the light beam (5) on the scene (4).

13. An optical sensing system (1) according to claim 12, wherein each of said photodetectors is a single photon detector, preferably a single photon avalanche detector SPAD.

14. An optical sensing system (1) according to any of claims 12 to 13, wherein the system (1) comprises at least a second optical sensor (21).

15. An optical sensing system (1) according to any of claims 12 to 13 or 14, wherein the system (1) is adapted to triangulate detection points of said first optical sensor (2) with projection position of said projector (3) or with detection points of said second optical sensor (21).
